# EUROPEAN PATENT APPLICATION

(11) **EP 3 493 360 A1**
(43) Date of publication of application: **05.06.2019**
(21) Application number: 17382818.7
(22) Date of filing: 01.12.2017
(51) Int. Cl.: H02J 13/00, H02J 1/00, H02J 3/38, H02J 7/34, H02J 3/00

(54) **A METHOD AND A SYSTEM FOR EFFICIENT DISTRIBUTION OF ELECTRICAL ENERGY IN A PEER-TO-PEER DISTRIBUTED ENERGY NETWORK**

(71) Applicant: Telefonica Innovacion Alpha S.L, 28013 Madrid (ES)
(72) Inventor: Phoel, Wayne, 28013 Madrid (ES); Stalling, Lars, 28013 Madrid (ES)
(74) Representative: Carlos Hernando, Borja

(57) **Abstract**

The method comprising measuring, by one or more energy sensors located in a first node of the plurality of nodes, a series of electrical energy characteristics of a first node of a plurality of nodes of an energy network, said series of electrical energy characteristics including voltages levels and/or currents levels of electrical connections to said electrical energy loads and physical features including losses and/or congestion of additional physical connections connecting the first node with other nodes of the plurality of nodes; and controlling, by an energy efficiency controller operatively connected with said one or more energy sensors, a transfer of a specific amount of electrical energy from the first node to at least one second node of the plurality of nodes in order said transfer of electrical energy being comprised in a determined voltage range, wherein said determined voltage range being below a low voltage threshold.

## Description

### Field of the invention

The present invention generally relates to distributed energy networks. In particular, present invention relates to a method, and to a system, for efficient distribution of electrical energy in a peer-to-peer distributed energy network, at human safe voltage levels, in which said energy network is adapted for the distribution of electrical energy, i.e. the nodes included in the energy network are connected in such a way that electrical energy can flow among them.

### Background of the invention

The majority of electrical systems are designed for appliances and load levels in the developed world, such as 120 Volts (V) AC (alternating current), and hundreds of Watts of power. Much of the direct current (DC) literature focuses on voltage levels over 300 V, which is not safe without significant and costly circuit breakers.

48 V is human safe and has been adopted as the standard in telecommunications systems (such as cell phone base stations) and computing centers. Backup batteries from base stations are known to work on a 48 volt DC voltage. But little work exists on creating a usable electricity network at safe voltage levels.

Document 'Architecture and System Analysis of Microgrids with Peer-to-Peer Electricity Sharing to Create a Marketplace which Enables Energy Access', Wardah Inam et al. 9th International Conference on Power Electronics (ICPE 2015 -ECCE Asia), June 2015, discloses a new concept of peer-to-peer electricity sharing which creates a marketplace for electricity. In this marketplace, the people who can afford power generating sources such as solar panels can sell electricity to people who are unable to afford generating sources or who might have access to electricity but require more electricity at certain times. These ad- hoc microgrids created by sharing of resources provide affordable electricity and are enabled by a Power Management Unit (PMU) described in this paper.

Document, 'A scalable dc microgrid architecture for rural electrification in emerging regions' P. Achintya Madduri, et al. presents the design and experimental validation of a scalable DC microgrid architecture for rural electrification. The microgrid design has been driven by field data collected from Kenya and India. The salient features of the microgrid are distributed voltage control and distributed storage, which enable developed world grid cost parity. This document calculates that the levelized cost of electricity for the proposed DC microgrid system will be less than $0.40 per kW-hr. It also presents experimental results from a locally installed DC microgrid prototype that demonstrates the steady state behavior, the perturbation response, and the overall efficiency of the system.

However, in low-income regions, viable solutions need to consider costs of every component. Most of the systems considered in the literature don't worry about costs of wires, and are not so concerned about transmission and conversion losses; however these can have a significant effect on the optimization in low-margin energy networks.

The majority of microgrids are designed and built for many loads and assumes even if the initial implementation has low load requirements, the system will grow to 100's of Watts and therefore must build in all that capability up front, at significant, typically prohibitive cost.

Users in developing countries cannot afford that upfront cost; they need to start small with the ability to grow. Also, to eliminate extra costs of DC circuit breakers, limiting the voltage level to below 50 V is necessary.

There is nothing that exists that focuses on a scalable system that starts with low load levels and low voltages and can evolve to accommodate larger loads and higher currents as users' needs increase and as they can afford more expensive equipment.

### Description of the Invention

Embodiments of the present invention provide according to an aspect a method for efficient distribution of electrical energy in a peer-to-peer distributed energy network, wherein said energy network is adapted for the distribution of electrical energy and comprises a plurality of nodes, and wherein each node (e.g. a home) comprises one or more devices including electrical energy loads.

The method comprises measuring, by one or more energy sensors located in a first node of the plurality of nodes, a series of electrical energy characteristics of the first node, and controlling, by an energy efficiency controller operatively connected with said one or more energy sensors, a transfer of a specific amount of electrical energy from the first node to at least one second node of the plurality of nodes in order said transfer of electrical energy being comprised in a determined voltage range, wherein said determined voltage range being below a low voltage threshold.

According to the proposed method, preferably, the series of electrical energy characteristics include voltages levels and/or currents levels of electrical connections to said electrical energy loads and physical features including losses and/or congestion of additional physical connections (e.g. wires or similar) connecting the first node with other nodes of the plurality of nodes.

According to a preferred embodiment, the low voltage threshold is 50 Volts. Preferably the low voltage threshold is comprised in a range between 12 to 48 Volts.

In an embodiment, the transfer of electrical energy is comprised also in a determined current range, said determined current range being lower of a low current threshold comprised between 0.1 and 2 Amperes.

The transfer of electrical energy can be requested either by the first node or by the at least one second node.

The connection of the energy efficiency controller with the one or more energy sensors can be performed via said additional physical connections connecting the first node with the other nodes or alternatively via a separate communication system, which includes a wireless communication network or a telephone network.

In an embodiment, the one or more devices further includes electrical energy generation elements including solar panels, wind turbines and/or diesel generation engines, among others and/or electrical energy storage elements including batteries and/or capacitors.

In an embodiment, the energy efficiency controller is further operatively connected with one or more energy sensors located in said at least one second node. In this case the energy efficiency controller can control the transfer of electrical energy taking into account a series of additional measured characteristics indicative of a resistance of the additional physical connections as well as power lost.

Moreover, the transfer of electrical energy can be controlled considering at least one of: a charge level of the electrical energy storage elements of the first node, an efficiency value of charging the electrical energy storage elements, and/or a contracted electrical energy transfer including required electrical energy and period of time over which the electrical energy is needed, and predictions for availability of generated electrical energy at the first node and also at the second node and predictions of storage capacity at the first node for the period of time being considered.

In an embodiment, the transfer of said specific amount of electrical energy is for two or more second nodes of the plurality nodes, termed as receiving node A and receiving node B, the energy efficiency controller in this case being further operatively connected with one or more energy sensors located in each one of said receiving node A and node B, and the energy efficiency controller further controlling the transfer of the specific amount of electrical energy to both the receiving node A and node B by considering a timeline for needed electrical energy of the receiving node A and receiving node B.

Even, the transfer of electrical energy can be automatically controlled if a charge level and/or storage level of the electrical energy storage elements of the second node differs from a charge level and/or storage level of the electrical energy storage elements of the first node.

Embodiments of the present invention also provide according to another aspect a system configured to perform the method embodiment steps and operations summarized above and disclosed in detail below.

In particular, the proposed system has a plurality of connected nodes of an energy network adapted and configured to distribute energy between them, preferably electrical energy, and each comprising one or more devices including energy loads, among others. Moreover, the proposed system also includes a plurality of energy sensors and an energy efficiency controller.

Each node of the plurality of nodes comprises one or more of said energy sensors, wherein the one or more energy sensors located in a node are adapted and configured to measure a series of electrical energy characteristics of the node, for instance voltages levels and/or currents levels of electrical connections to the electrical energy loads and/or physical features including losses and/or congestion of additional physical connections (e.g. wires or similar) connecting the node with other nodes of the plurality of nodes.

The energy efficiency controller is operatively connected with the one or more energy sensors located in at least one first node of the plurality of nodes and adapted and configured to control a transfer of a specific amount of electrical energy from the first node to at least one second node of the plurality of nodes in order said transfer of electrical energy being comprised in a determined voltage range, wherein said determined voltage range below a low voltage threshold, preferably below 50 Volts.

In the proposed system, the loads may include lighting systems and/or appliances including televisions, radios, kitchen appliances, refrigerators and/or heating equipment, among others. In addition, in the proposed system, the one or more devices may further include electrical energy generation elements such as solar panels, wind turbines, diesel generation systems, geothermal systems, a human-powered crank generator, etc. and/or electrical energy storage elements such as batteries or capacitors.

The energy controller can be located in the first node or at a remote site such as the offices of a service provider.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

Present invention maximizes satisfaction of electrical energy (or electricity) demand at low cost by closely managing the cost of equipment and wires and also the current levels sent over wires connecting nodes in a decentralized electricity network. The invention enables a much more efficient distribution of electrical energy in a resource-constrained, peer-to-peer energy network where upfront cost of equipment is a major, sometimes prohibitive consideration and safety is a significant concern. In addition, in such a cost-constrained situation, as is encountered in developing communities, the invention enables a much more flexible allocation of energy by focusing on use of all resources available over desired time periods in order to flow energy to desired locations with acceptable losses. In addition, the invention enables a scalable network of distributed generation, storage, and loads, and it optimizes performance in low-cost, low-voltage scenarios in which component losses (wires, voltage conversion, circuit breakers etc.) can be significant factors.

### Brief Description of the Drawings

The previous and other advantages and features will be more fully understood from the following detailed description of embodiments, with reference to the attached drawings, which must be considered in an illustrative and non-limiting manner, in which:
Fig. 1 schematically illustrates an example of a system including two connected nodes in which the invention can be implemented.
Fig. 2 is a flow chart illustrating an embodiment of a method efficient distribution of electrical energy in a peer-to-peer distributed energy network.
Fig. 3 is a schematic illustration of another embodiment of the present invention. In this case, the energy efficiency controller to control the transfer of electrical energy takes into account wire losses, available storage levels at each node and an electrical energy demand over time.
Fig. 4 schematically illustrates a situation in which multiple links between nodes are leveraged, according to an embodiment of the present invention.
Fig. 5 is a schematic illustration of another embodiment of the present invention. In this case, the energy efficiency controller controls the transfer of electrical energy in order all the nodes having the same charge and/or storage level.
Figs. 6A and 6B schematically illustrate two different scenarios in which the transfer of electrical energy can be made. Fig. 6A illustrates a first scenario in which ND1 calculates distribution of current over two paths to ND 3, accounting for link and node losses. Fig. 6B illustrates a second scenario in which ND3 calculates distribution of current over two paths: one from ND1 and one from ND2, counting for link and node losses and ND2 separately contracts for additional electrical energy from ND1 if needed.

### Detailed Description of the Invention and of Preferred Embodiments

Present invention maximizes the capability delivered in peer-to-peer distributed energy network at safe voltage levels. Voltages less than a low voltage threshold, in particular 50 V are considered safe for use around people without requiring extra protections such as circuit breakers. Common equipment comes in multiples of 12 V, so present invention can use 48 V as a typical voltage, although others, such as 12 V and 24 V apply as well.

The other constraint the invention focuses on is cost of physical components, including wires, in a peer-to-peer energy network comprising a plurality of nodes.

The main key elements of the invention are: 1) Energy sensors deployed in the distributed energy network to measure statistics such as voltage, current, losses, etc.; 2) Management and control of electrical energy transfers to meet desired low voltage levels while minimizing losses; and 3) Modular design to enable incremental growth of system capabilities (such as increased load levels, and increased number of participants (nodes) in the energy network).

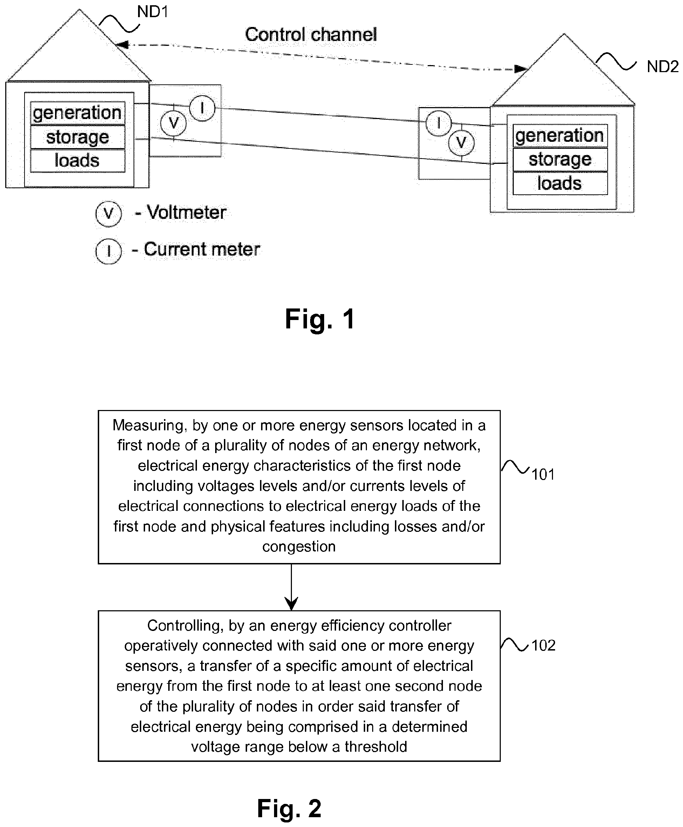

The basic components of the system described here include connections to the electrical components/devices (electrical energy generation elements, electrical energy storage elements, and/or electrical energy loads) at a node; additional physical connections (i.e. wires) to other nodes; sensors to measure statistics such as voltage across wires and current through wires. The system also includes the ability to communicate with the electrical components at the local node and also with other nodes in the energy network. The communication links may use the same wires as used to transfer electrical energy, or they may use a separate communication system (e.g. wireless links, telephone network, etc.). An example of two connected nodes ND1, ND2, (e.g. homes) is shown in Fig. 1.

It should be noted that the presence of electrical energy generation elements and electrical energy storage elements in a node is not mandatory. The basic configuration scheme of a node applies if there are only electrical energy loads at the node, i.e. the one or more components/devices a node has need only to include some type of electrical energy loads, e.g. a home appliance, such as a television, a microwave, etc. or lights or any type of refrigeration system.

Fig. 1 illustrates an embodiment of the proposed method for efficient distribution of electrical energy in said peer-to-peer energy network. According to this particular embodiment, one or more energy sensors located in a first node of the plurality of nodes measure, step 101, a series of electrical energy characteristics of the first node, said series of electrical energy characteristics including voltages levels and/or currents levels of electrical connections to electrical energy loads and physical features including losses and/or congestion of additional physical connections (e.g. wires) connecting the first node with other nodes of the plurality of nodes. Then, an energy efficiency controller (i.e. a computing system/agent/module having computing and/or processing skills, and implemented in hardware, software or combinations thereof), operatively connected with said one or more energy sensors, controls, step 102, a transfer of a specific amount of electrical energy from the first node to at least one second node of the plurality of nodes in order said transfer of electrical energy being comprised in a determined voltage range lower than the low voltage threshold.

The energy efficiency controller can be located either in the first node or in a remote site. Likewise, the connection of the energy efficiency controller with the one or more energy sensors can be performed via said additional physical connections (i.e. via the wires) or via a separate communication system including a wireless communication network or a telephone network.

The constraints on cost, scale, and losses imply that electrical energy exchanges will typically use direct current (DC). And more specifically, the current levels must be managed to minimize the peak-to-average current ratio over time in order to make the most efficient use of the transmission over the wires. In the simplest system architecture, one node has requested transfer of a specific amount of electrical energy by a particular deadline. In the case that both nodes have sufficient electrical storage (e.g. battery), the energy efficiency controller optimizes the flow of electrical energy from the supplier's generators to a combination of its storage and the requester's storage and loads. The power lost in transmission is a combination of the (typically fixed) percentage loss of components for functions such as voltage conversion and current-dependent losses over the wire, where power lost in the wire is the square of the current level multiplied by the resistance. If the requesting node needs a specific power level for, say, two hours, but the electrical energy becomes available six hours earlier, the same amount of energy could be spread out over the full eight hours rather than only sent during the two hours it is needed. That factor of four increases in time to send electrical energy corresponds to one quarter the required current, and, accordingly, one sixteenth the power lost over the wire.

In a community in which a user may only be able to afford 10-15 EUR for equipment, the cost of wires to connect to others can be significant (as an example, at the current time, it is reasonable to buy wire with resistance of 80 ohms per kilometer at a price of about 0.05 EUR per meter--so a wire connecting two nodes 100 m apart, which includes some slack, would cost 5 EUR). Lower resistance wires typically cost more. In this example, a transfer at 12 W at 48 V would cause 1 W (almost 10%) to be lost in the transmission over a 100 m wire.

Typical lengths of wire needed to connect nodes are 100-200 m. In some densely packed communities, this could be as low at 5-10 m. Yet in some widely dispersed communities it could be 200m or greater. At distances of 500 m or more, the benefits of this approach decrease.

80 ohms per km is on the high end of resistances for wires available commercially, with some wires available at approximately 200 ohms per km. More commonly available, but also more expensive wires for this application have resistances in the range 8 - 33 ohms per km.

The invention can be targeted for initial power draws on the order of 1-5 W, with the ability to support growth to draws on the order of ten or multiple 10's of Watts. Consistent power levels greater than 100 W falls outside the ideal range for the invention. Correspondingly, the transfer of electrical energy can be also comprised in a determined current range, preferably around 0.1 A, with the ability to extend up to approximately 2 A.

The energy sensors, including voltage and current sensors, when combined with a control channel of the nodes to communicate measured statistics provide timely estimates of the voltage drop along the wires, which indicates the wire resistance as well as power lost. The control channel is also used to exchange other network statistics including, if available, state of charge of the batteries (or levels of other types of energy storage devices) at each node, efficiencies of charging the electrical storage devices, contracted energy transfers, including required energy and timeline over which the electrical energy is needed, and potentially predictions for availability of generated electrical energy at each node and predictions of storage capacity at each node for the time period being considered.

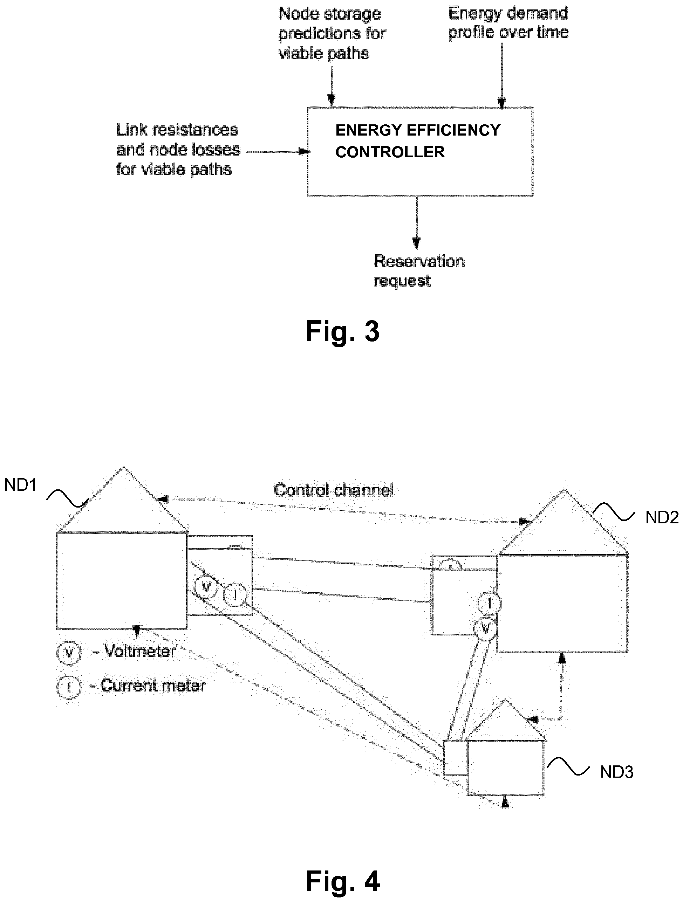

With reference to Fig. 3 therein it is illustrated another embodiment of the present invention. Given a known timeline for needed electrical energy, the energy efficiency controller computes the transfer efficiency for multiple strategies for how and where to send the electrical energy through a combination of network nodes and storage devices. The optimization account for wire losses as a function of current level over each link, available storage levels at each node over the time period being considered and other component losses as the electrical energy transits the energy network. The energy efficiency controller selects the strategy that produces the most efficient transfer of electrical energy and requests the relevant resources be reserved (links, storage, etc.) for the full electrical energy transfer.

The invention can also be extended to leverage multiple links in an energy network (see Fig. 4) such that multiple paths (some of more hops through other nodes) can be used to minimize the current on any one of the link (of course, this optimization also accounts for other losses in the transmissions).

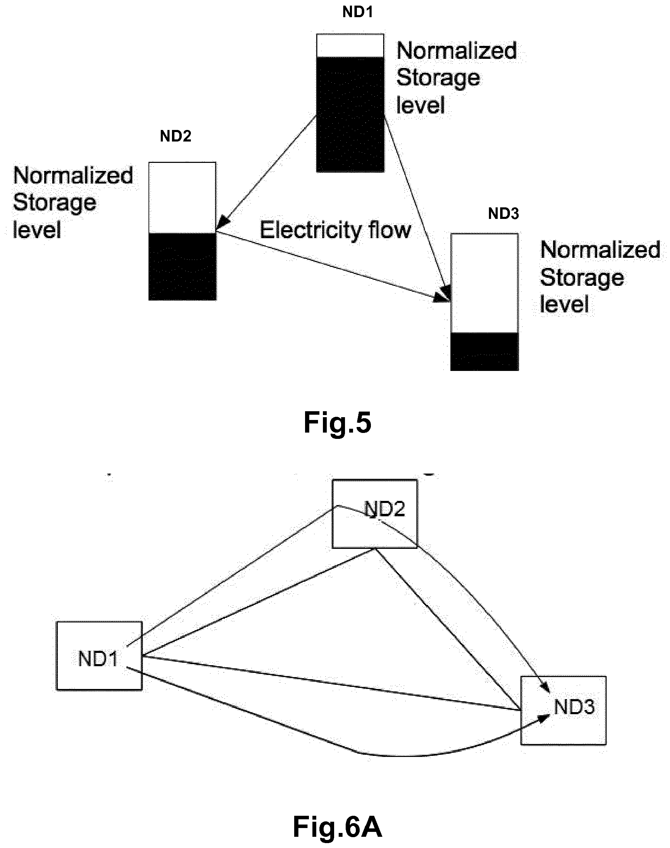

Fig. 5 illustrates another embodiment of the present invention. In this case, the electrical energy transfer strategy includes sending electrical energy over links at low current with low losses even if there is no immediate demand. Instead, the energy efficiency controller can be configured to equalize the battery levels such that electrical energy is always equally distributed throughout the energy network, essentially pre-positioning it at a low cost for use when it's needed. The equalization can be weighted such that the goal can be to have the same amount of energy stored at each node, the same fraction of storage capacity at each node, storage levels consistent with past usage levels for individual nodes, or other criteria.

When losses become too high, the energy efficiency controller is designed so that a new wire can be added in addition to the existing wire(s) between two nodes to increase the capacity. There is no need to replace the existing wire unless there is a better location in the energy network identified for that wire. The interface allows for simple, effective splicing of wires and automated measurements of current limits of wires.

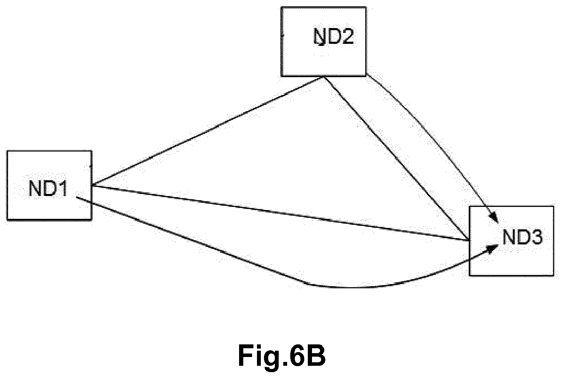

With reference to Figs. 6A and 6B, the decision to use multiple paths for transfer of electrical energy can be made at either the sending node or the receiving node. As described above, the implied implementation is that the sending node considers multiple possible paths to transfer a specific amount of electrical energy over a specified time to the recipient. But, a recipient could enter into multiple contracts with multiple trading partners in order to keep losses under a desired level.

While the foregoing is directed to embodiments of the present invention, other and further embodiments of the invention may be devised without departing from the basic scope thereof. For example, other aspects may be implemented in hardware or software or in a combination of hardware and software.

The scope of the present invention is determined by the claims that follow.

## Claims

1. A method for efficient distribution of electrical energy in a peer-to-peer distributed energy network, wherein said energy network being adapted for the distribution of electrical energy and comprising a plurality of nodes, and wherein each node comprising and one or more devices including electrical energy loads, the method comprising:
measuring, by one or more energy sensors located in a first node of the plurality of nodes, a series of electrical energy characteristics of the first node, said series of electrical energy characteristics including voltages levels and/or currents levels of electrical connections to said electrical energy loads and physical features including losses and/or congestion of additional physical connections connecting the first node with other nodes of the plurality of nodes; and
controlling, by an energy efficiency controller operatively connected with said one or more energy sensors, a transfer of a specific amount of electrical energy from the first node to at least one second node of the plurality of nodes in order said transfer of electrical energy being comprised in a determined voltage range, wherein said determined voltage range being below a low voltage threshold.

2. The method of claim 1, wherein the low voltage threshold being 50 Volts, preferably comprised in a range between 12 to 48 Volts.

3. The method of previous claims, wherein the transfer of electrical energy further being comprised in a determined current range, said determined current range being lower of a low current threshold comprised between 0.1 and 2 Amperes.

4. The method of previous claims, wherein the connection of the energy efficiency controller with the one or more energy sensors being performed via said additional physical connections connecting the first node with the other nodes or via a separate communication system including a wireless communication network or a telephone network.

5. The method of claim 1, wherein the one or more devices further includes electrical energy generation elements including solar panels, wind turbines and/or diesel generation engines and/or electrical energy storage elements including batteries and/or capacitors.

6. The method of claim 5, wherein said energy efficiency controller being further operatively connected with one or more energy sensors located in said at least one second node, and the method further comprising controlling, by the energy efficiency controller, the transfer of electrical energy taking into account a series of additional measured characteristics indicative of a resistance of the additional physical connections as well as power lost.

7. The method of claim 6, further comprising controlling the transfer of electrical energy considering at least one of: a charge level of the electrical energy storage elements of the first node, an efficiency value of charging the electrical energy storage elements, and/or a contracted electrical energy transfer including required electrical energy and period of time over which the electrical energy is needed, and predictions for availability of generated electrical energy at the first node and also at the second node and predictions of storage capacity at the first node for the period of time being considered.

8. The method of claim 5, wherein the transfer of said specific amount of electrical energy being for two or more second nodes of the plurality nodes, termed as receiving node A and receiving node B, and wherein the energy efficiency controller being further operatively connected with one or more energy sensors located in each one of said receiving node A and node B, the method further comprising controlling the transfer of the specific amount of electrical energy to both the receiving node A and node B by considering a timeline for needed electrical energy of the receiving node A and receiving node B.

9. The method of claim 5, wherein the transfer of electrical energy being automatically controlled if a charge level and/or storage level of the electrical energy storage elements of the second node differs from a charge level and/or storage level of the electrical energy storage elements of the first node.

10. The method of claim 1, wherein the transfer of electrical energy being requested either by the first node or by the at least one second node.

11. A system for efficient distribution of electrical energy in a peer-to-peer distributed energy network, the system comprising:
a plurality of nodes of an energy network, wherein said energy network being configured and adapted for the distribution of electrical energy and wherein each of said plurality of nodes comprising and one or more devices including electrical energy loads;
a plurality of energy sensors, wherein each node of the plurality of nodes comprising one or more of said energy sensors and wherein the one or more energy sensors located in a node being adapted and configured to measure a series of electrical energy characteristics of the node, said series of electrical energy characteristics including voltages levels and/or currents levels of electrical connections to said electrical energy loads and physical features including losses and/or congestion of additional physical connections connecting the node with other nodes of the plurality of nodes; and
an energy efficiency controller operatively connected with at least one or more energy sensors located in a first node of the plurality of nodes and adapted and configured to control a transfer of a specific amount of electrical energy from the first node to at least one second node of the plurality of nodes in order said transfer of electrical energy being comprised in a determined voltage range, wherein said determined voltage range being below a low voltage threshold.

12. The system of claim 11, wherein the low voltage threshold being 50 Volts, preferably comprised in a range between 12 to 48 Volts.

13. The system of claim 11 or 12, wherein the transfer of electrical energy further being comprised in a determined current range, said determined current range being lower of a low current threshold comprised between 0.1 and 2 Amperes.

14. The system of claim 11, wherein the energy efficiency controller being located in the first node or in a remote site.

15. The system of claim 11, wherein the one or more devices further includes electrical energy generation elements including solar panels, wind turbines and/or diesel generation engines and/or electrical energy storage elements including batteries and/or capacitors.
